Europäisches Patentamt

(19) European Patent Office

Office européen des brevets

(11) Numéro de publication: **0 152 318**
**B1**

(12) **FASCICULE DE BREVET EUROPÉEN**

(45) Date de publication du fascicule du brevet:
20.05.87

(51) Int. Cl.⁴: **C 08 G 14/06**, C 09 J 3/16,
C 08 L 61/34

(21) Numéro de dépôt: **85400099.9**

(22) Date de dépôt: **22.01.85**

(54) **Procédé de fabrication de résines aminoplastes.**

(30) Priorité: **26.01.84 FR 8401188**

(43) Date de publication de la demande:
**21.08.85 Bulletin 85/34**

(45) Mention de la délivrance du brevet:
**20.05.87 Bulletin 87/21**

(84) Etats contractants désignés:
**AT BE CH DE GB IT LI NL SE**

(56) Documents cité:
**CH-A-445 859**
**FR-A-2 092 232**

**PATENTS ABSTRACTS OF JAPAN, vol. 5, no. 28 (C-44) 700 , 20 février 1981**

(73) Titulaire: **SOCIETE CHIMIQUE DES CHARBONNAGES SA, Tour Aurore Cédex 5, F-92080 Paris la Défense 2 (FR)**

(72) Inventeur: **Boucheron, Bernard, 16, rue des Vergers, F-57110 Yutz (FR)**
Inventeur: **Greff, Marcel, Zerwastrasse 3, D-6643 Perl Tettinger (DE)**

(74) Mandataire: **Rieux, Michel, C d F Chimie S.A. Service Propriété Industrielle Tour Aurore Place des Reflets Cédex no. 5, F-92080 Paris la Défense 2 (FR)**

## 0 152 318

## Description

La présente invention conerne un procédé de préparation de liants aminoplastes. Elle a plus particulièrement pour objet un procédé de fabrication de colles à bois produisant de faibles émanations de formol et qui conduisent à des collages résistants à l'eau et aux intempéries.

La majorité des colles utilisées dans l'industrie du bois, sont à base de résines urée-formol qui sont connues comme peu résistantes à l'humidité. Les résines phénoliques si elles conviennent pour la réalisation de collages résistants aux intempéries, fournissent des collages colorés et produisent des dégâts dans le bois au moment du pressage. Par ailleurs, ces résines sont connues pour être peu réactives, ce qui ne permet d'obtenir que de faibles cadences de fabrication lors de leur utilisation dans l'industrie du bois. De plus, l'utilisation optimale de ces résines phénoliques nécessite d'augmenter leur alcalinité, par l'addition de durcisseurs eux-mêmes alcalins: une telle alcalinité provoque des efflorescences à le surface des matériaux fabriqués. Afin d'obtenir des résines qui permettent d'obtenir des collages présentant en particulier une bonne résistance à l'humidité et aux intempéries, on a proposé des recettes particulières de fabrication de résines qui contiennent de l'urée, de la mélamine, du formol et du phénol. A cet effet, on a proposé de condenser la mélamine et/ou l'urée avec du formol en solution aqueuse puis de faire réagir le condensat obtenu avec du phénol avec le cas échéant, de la mélamine et du formol, cette dernière condensation étant réalisée à pH compris entre 7,5 et 10. Les résines obtenues en mettant en oeuvre un tel procédé, permettent d'obtenir des collages acceptables en ce qui concerne la résistance aux intempéries mais contiennent encore des quantités trop élevées de formol libre et de phénol libre.

La présence de formol libre dans ces colles présente l'inconvénient de dégager d'importantes quantités de formol gazeux au moment de la fabrication des panneaux, une partie de ce formol se retrouvant ensuite dans les panneaux finis. De même la présence de phénol libre dans les colles est aussi préjudiciable à l'atmosphère des ateliers mettent en oeuvre ces colles. De plus la présence du phénol dans ces résines est à la source d'un problème de pollution pour ce qui concerne le traitement des eaux usées lorsqu'on sait que quand on traite ces eaux usées phénolées dans des stations d'épuration, le phénol détruit les microorganismes indispensables au bon fonctionnement de ces stations.

Le besoin se fait donc sentir de mettre au point des qualités de colles capables non seulement de fournir des collages présentant de bonnes caractéristiques mécaniques et ainsi qu'une bonne résistance aux intempéries et au vieillissement, mais aussi des qualités qui présentent de faibles teneurs en formol libre et en phénol libre.

La présente invention concerne un procédé de fabrication de liants aminoplastes comprenant de l'urée, de la mélamine, du formol et du phénol et qui fournit des collages présentant de bonnes caractéristiques mécaniques et un bon comportement au vieillissement et aux intempéries.

La présente invention concerne un procédé de fabrication de liants aminoplastes, contenant pour une mole d'urée, 0,2 à 0,8 moles de mélamine 2 à 5 moles de formol, 0,05 à 0,5 moles de phénol, caractérisé en ce qu'on condense dans une première étape tout le phénol avec un précondensat d'urée et de formol de rapport molaire $\frac{F}{U}$ compris entre 3 et 6, ou avec du formol en solution aqueuse en présence d'urée de manière que la proportion d'urée présente à cette étape, soit comprise entre 33 et 100 % par rapport à l'urée totale finale contenue dans le résine finie, la condensation étant conduite à une température comprise entre 40 et 100°C, d'abord à pH neutre, puis à pH acide au plus égale à 5,5 pendant au moins 30 minutes et ce que dans une deuxième étape, on ajoute après neutralisation toute la mélamine et le cas échéant une nouvelle quantité d'urée, de manière à ce que la proportion d'urée présente à ce stade soit au plus égale à 100 %, par rapport à l'urée totale contenue dans la résine finie, la condensation étant conduite à pH basique, au moins égale à 8, à une température comprise entre 40 et 100° C, jusqu'à ce que la viscosité du mélange réactionnel soit comprise entre 200 et 1500 mPa.s à 20° C pour un extrait sec de 60 et en ce que dans une troisième étape, on ajoute le cas échéant, le restant de l'urée après refroidissement à température comprise entre 40 et 80° C.

On a en effet constaté qu'en opérant dans ces conditions, on obtient ddes résines présentant à la fois de bonnes caractéristiques techniques, ainsi que des résines à teneur réduite en formol libre et en phénol libre.

Le procédé de la présente demande consiste à condenser dans une première étepe, le totalité du phénol avec un précondensat d'urée et de formol de rapport molaire $\frac{F}{U}$ compris entre 3 et 6 et de préférence entre 4 et 5 ou avec du formol sous forme de solution aqueuse en présence d'urée de matière que le proportion d'urée présente à cette étape, soit comprise entre 33 et 100 %, par rapport à l'urée totale présente dans la résine finie. Les précondensats d'urée et de formol, sont des produits connus, préparés par réaction d'urée et de formol de rapport moleire compris entre 3 et 6. Comme précondensats, on peut citer par exemple, les produits vendus sous la marque ®"SARUFORM 80''.

Lorsque le formol est additionné sous forme de solutions aqueuses on utilise les solutions commerciales titrant entre 35 et 50 %.

On obtient des résines convenant comme liants d'aminoplastes, pour l'encollage du bois en faisant réagir dans une première étape, les précondensats ou une solution de formol avec tout le phénol et de l'urée.

Selon l'invention, cette première étape est conduite à pH neutre pendant 30 minutes, à une température comprise entre 40° C et 100° C, puis à pH acide au plus égal à 5,5 pendant environ une heure à une température voisine de 100° C. L'acidification est obtenue par addition par exemple, d'une solution diluée d'acide formique. Selon une caractéristique importante du procédé de l'invention, toute l'urée peut être ajoutée lors de la première étape de condensation.

Le deuxième étape du procédé objet de la présente invention, consiste à neutraliser le milieu réactionnel de

2

# 0 152 318

façon à obtenir un pH au moins égal à 8. Une telle neutralisation est obtenue par l'addition par exemple d'une solution de soude caustique à 25 %. Après neutralisation selon l'invention, on ajoute la mélamine en totalité et le cas échéant, de l'urée de manière que la proportion d'urée présente à cette étape soit au plus égale à 100 %, par rapport à l'urée totale contenue dans la résine finie. La température du mélange réactionnel est maintenue aux alentours de 95° C et le pH est maintenu à une valeur au moins égale à 8 et de préférence voisine de 8,5 par addition de solution de soude. Le chauffage et le pH, sont maintenus aux valeurs indiqués jusqu'à ce que la viscosité du mélange réactionnel soit comprise entre 200 et 1500 mPa.s à 20° C, pour une teneur en extrait sec de 60 %. L'extrait sec étant défini comme étant le pourcentage de produit obtenu après avoir séché un gramme du mélange réactionnel pendant 2 heures à 120° C, dans une étuve pourvue d'une ventilation naturelle.

La troisième étape objet du procédé de l'invention consiste à ajouter le cas échéant après refroidissement à température comprise entre 40 et 80° C le restant d'urée.

Les résines selon l'invention possèdent de très bonnes propriétés, en particulier présentent des quantités de formol libre et de phénol libre faibles, leur tenue à la température ordinaire est normale: à 20°C ces mélanges commencent à gélifier seulement au bout de plus de trois mois. Ces résines peuvent être traitées de manière courante, comme les autres résines non modifiées. On peut y ajouter des modificateurs connus tels que les produits hydrofugeants ou fongicides. Les résines préparées selon le procédé de l'invention sont durcies en mettant en oeuvre des techniques usuelles de collages et d'agglomération du bois, c'est-à-dire, par effet catalytique de catalyseurs connus: chlorure ou sulfate d'ammonium, en faisant réagir en même temps à la chaleur.

Les exemples suivants illustrent la présente invention. Dans les exemples, les quantités sont exprimées en partie en poids. La réactivité des résines est déterminée selon une méthode dite "du bécher" qui consiste à ajouter à 50 g de résine, 5 g d'une solution de chlorure d'ammonium à 10 %: le mélange est placé dans un bécher de 100 ml de forme haute. On plonge le bécher dans un bain d'eau bouillante tout en agitant le mélange et on mesure le temps écoulé jusqu'à gélification du mélange.

## Exemple 1

On condense dans un réacteur:
- 30,71 parties d'un précondensat d'urée et de formol titrant 56,5 % de formol et 23,3 % d'urée.
- 0,58 partie d'urée.
- 2,55 parties de phénol
- 12,54 parties d'eau

La condensation est réalisée à 45° C, pendant 30 minutes, puis le mélange réactionnel est chauffée de façon à ce que la température atteigne 100° C. Le pH du mélange qui est alors égal à 6 est abaissé à 4,7 par addition de 0,05 partie d'une solution diluée à 36 % d'acide formique, le mélange est alors chauffé pendant une heure.

On ajoute ensuite une solution de soude caustique, de façon à faire monter le pH à 8,5. Après refroidissement à 90° C, on additionne:
- 13,08 parties de mélamine
- 2,11 parties d'urée.

Le mélange réactionnel est chauffé à 95° C et le pH est remonté à une valeur de 8,7, par addition de 0,04 partie d'une solution de soude à 50 %. On maintient le milieu réactionnel à cette température jusqu'à ce que la viscosité du mélange réactionnel soit de 600 mPa.s.

Après refroidissement à 50° C, on ajoute 2,23 parties d'urée. Après refroidissement total on obtient une résine qui présente les caractéristiques suivantes:
- Extrait sec: 60,7
- pH: 8,5
- Viscosité à 20° C: 400 mPa.s
- Réactivité déterminée selon la méthode du bécher 2 min. 30 s
  Stabilité à 20° C: utilisable même après 2 mois
- Formol libre %: 0,44
- Phénol libre %: 0,57

## Exemple 2

On condense dans un réacteur:
- 1238 parties d'un précondensaturée-formol titrant 55,45 % de formol et 22,72 % d'urée.
- 131,58 parties de phénol à 95 %
- 235,07 parties d'urée.
- 130,70 parties d'eau.

Cette première étape est conduite comme dans l'exemple 1, en chauffant à 45° C pendant 30 minutes, puis à 100° C et le pH du mélange réactionnel est abaissé à 5,1 par addition d'une solution diluée d'acide formique.

On ajoute ensuite une solution de soude caustique, de façon à faire monter le pH à 8,6. Après refroidissement à 90° C on additionne 437,5 parties de mélamine et 327,6 parties d'eau. On maintient le milieu reactionnel à cette température, jusqu'à ce que la viscosité du mélange réactionnel soit de 240 mPa.s.

Après refroidissement on obtient une résine qui présente les caractéristiques suivantes:
- Extrait sec: 62,2
- pH: 8,7
- Viscosité à 20° C: 240 mpa.s

## Exemple 3

On mélange dans une première étape:
- 1217,83 parties de formurée (titrant 686,25 parties de formaldéhyde, 273,04 parties d'urée et 258,54 parties d'eau)
- 105,46 parties d'urée en perles
- 418,93 parties d'eau et 131,58 parties de phénol à 95%.

Le mélange réactionnel est maintenu à 40-45° C pendant 30 minutes, puis porté à 100° C, où il amené à pH 4,7-4,8 par addition de 2 parties d'acide formique à 36 %. Il est alors maintenu à l'ébullition pendant 1 heure.

Après avoir amené le milieu réactionnel à pH 7,5 par additon de 5 parties de soude à 25 %, on ajoute 437,50 parties de mélamine et on maintient la température à 85° C.

Cette solution est chauffée à 90-100° C pendant 45 minutes, le pH est maintenu à 8-8,2 par addition de 2 fois 2,5 parties de soude à 25 % jusqu'à ce que sa viscosité soit 800 mPa.s.

La solution est alors refroidie rapidement et à 55° C, on lui ajoute 1 partie de soude à 25 %, 137,75 parties d'urée et 50,95 parties d'eau.

La résine obtenue présente les caractéristiques suivantes:
- pH: 8,8
- Extrait sec %: 61,8
- Temps de gel au bécher: 2min. 11s
- Viscosité à 20° C: 250 mpa.s
- Formaldéhyde libre: 0,85 %
- Phénol libre: 0,48 %

## Exemple 4

L'exemple 1 est répété en mettant en oeuvre dans la première étape:
- 1228,38 parties d'un précondensat urée - formol titrant 56,09 % de formol et 22,97 % d'urée
- 24,09 parties d'urée
- 53,95 parties de phénol à 95 %
- 475,08 parties d'eau
Dans une deuxième étape:
- 533,25 parties de mélamine
- 84 parties d'urée
Dans une troisième étape:
- 101,25 parties d'urée
La condensation est réalisée dans les mêmes conditions opératoires que l'exemple 1.
On obtient une résine qui présente les caractéristiques suivantes:
- Extrait sec: 61,47 %
- pH: 8,5
- Viscosité à 20° C: 475 mPa.s
- Réactivité déterminée selon la méthode du bécher: 2 min 20 s
- Formol libre %: 0,49
- Phénol libre %: 0,68

## Exemple 5

L'exemple 4 est répéte mais en mettant en oeuvre dans la première étape:
- 1184,70 parties du même précondensat urée - formol
- 23,12 parties d'urée
- 193,16 parties de phénol à 95 %
- 477,02 parties d'eau

# 0 152 318

Dans une deuxième étape:
- 477,25 parties de mélamine
- 81,25 parties d'urée
Dans une troisième étape:
- 63,50 parties d'urée
La résine obtenue présente les caractéristiques suivantes:
- Extrait sec: 62,01 %
- pH: 8,5
- Viscosité à 20° C: 440 mPa.s
- Réactivité selon la méthode du bécher: 2 min. 1 s
- Formol libre %: 0,12
- Phénol libre %: 0,23

## Exemple 6 (comparatif)

On prépare un produit adhésif de façon connue en partant de:
- 1361,32 parties d'une résine fraîchement préparée de rapport molaire formaldéhyde/urée: 1,8 et d'extrait sec 65,3 %.

On ajoute ensuite 361,60 parties de mélamine, 647,48 parties de formol à 40 % et 136,43 parties de phénol à 95 %. On porte le mélange à 95-98° C et on condense à cette température, en maintenant le pH à 8,4 - 8,6 par addition de 11,5 parties de soude à 25 % pendant 70 minutes et on refroidit lorsque la viscosite du mélange atteint 560 mPa.s. On réajuste alors le pH à 9,0 en ajoutant 4 parties de soude à 25 %.

La résine obtenue présente les caractéristiques suivantes :
- Extrait sec (%): 63,76
- pH: 8,5
- Viscosité à 20° C: 675 mPa.s
- Réactivité selon la méthode du bécher: 2 min. 2 s
- Formaldéhyde libre (%): 1,20
- Phénol libre (%): 1,49

## Exemple 7 (Comparatif)

L'exemple 6 est répété mais en supprimant l'addition de formol. On met en oeuvre:
- 1771,75 parties d'une résine de rapport molaire $\frac{F}{U} = 1,8$
- 171,9 parties de phénol à 95 %
- 456,25 parties de mélamine
- 100 parties d'eau
La résine obtenue présente les caractéristiques suivantes:
- Extrait sec %: 66,75
- pH: 8,5
- Viscosité à 20° C: 640 mPa.s
- Réactivité selon la méthode du bécher: 3 min 4 s
- Formol libre (%): 0,65
- Phénol libre (%): 2,68

## Exemple 8

On condense dans un réacteur:
- 1 331,78 parties de formol aqueux titrant 42,80 % de formol
- 557,5 parties d'urée
- 92,1 parties de phénol à 95 %
Le milieu réactionnel est chauffé de façon que sa température atteigne 100° C. On condense pendant 30 minutes.

On ajoute ensuite 5 parties d'une solution de soude à 24 % de façon à faire monter le pH à 8,3, puis on additionne 550 parties de mélamine.

Le mélange réactionnel est maintenu à 90-95° C et à pH voisin de 9 par une nouvelle addition de 2,5 parties d'une solution de soude jusqu'à ce que la viscosité du milieu réactionnel soit de 550 mPa.s à 20° C, ce qui nécessite une durée de 45 minutes.

Après refroidissement on obtient une résine qui présente lles caractéristiques suivantes:

- Extrait sec: 61,41
- pH: 8,5
- Viscosité à 20° C; 595 mPa.s
- Réactivité déterminée selon la méthode au bécher: 2 minutes 29 secondes
Formol libre: 0,24 %
Phénol libre: 0,96 %

**Exemple 9**

Les liants fabriqués aux exemples indiqués ont été utilisés pour fabriquer des panneaux de copeaux de bois à l'aide d'une presse sous une pression moyenne de 2 à 3 Mpa. et à une température de 180° C pendant 5 minutes.

Les tableaux annexés indiquent les caractéristiques des produits obtenus. Les mesures ont été déterminées selon les normes suivantes:

Le tableau annexé indique les caractéristiques des produits obtenus. Les mesures ont été déterminées selon les normes suivantes:
- Teneur en formol (perforateur): Norme EN 120
- Epaisseur, masse volumique et humidité: Norme DIN 52361
- Traction V 100: Norme DIN 68763
- Gonflement (%): Norme DIN 52364
- Traction V 313: Norme NF - B - 51 - 263
- Gonflement V 313: Norme HF - B - 51 - 263
Dans les tableaux:
- C.E. signifie couche extérieure
- C.I. signifie couche intérieure

6

| RESINE UTILISEE | RESINE DE L'EXEMPLE 1 | RESINE DE L'EXEMPLE 2 | RESINE DE L'EXEMPLE 3 | RESINE DE L'EXEMPLE3 | RESINE DE L'EXEMPLE 4 | RESINE DE L'EXEMPLE 5 | RESINE DE L'EXEMPLE 6 | RESINE DE L'EXEMPLE 7 |
|---|---|---|---|---|---|---|---|---|
| Type Panneau | Multicouche | Monocouche | Monocouche | Panneau 3bis Multicouche | Multicouche | Multicouche | Multicouche | Multicouche |
| – Taux encollage (C.E.,C.I) | 14-13 | 12 | 12 | | 12,5-11,5 | 12,5-11,5 | 14-13 | 14-13 |
| – Temps de gel des mélanges collants (C.E., C.I. secondes) | 95-66 | 58 | 65 | | 84-63 | 92-68 | 102,5-54 | 163-102 |
| – Perforateur Teneur en formol (mg/hg) | 46,4 | 51,5 | 46,8 | 51 | 42,8 | 51,2 | 67,1 | 30,0 |
| – Epaisseur (mm) | 18,59 | 15,45 | 15,44 | 18,5 | 18,53 | 18,57 | 18,46 | 18,56 |
| – Masse volumique (kg/m3) | 709 | 649 | 648 | 696 | 674 | 684 | 695 | 679 |
| – Traction transversale (MPa) V 100 | 0,37 | 0,30 | 0,34 | 0,36 | 0,35 | 0,34 | 0,38 | 0,36 |
| – Gonflements (%) 2 heures | 3,4 | 6,6 | 7 | | 4,3 | 4,9 | 4,5 | 4,3 |
| 24 heures | 7,7 | 11,4 | 12 | | 9,6 | 10,3 | 9,6 | 9,5 |
| – Humidité (%) bois sec | 10,1 | 6,5 | 6,4 | | 8,3 | 7,9 | 7,8 | 7,6 |
| – traction V 313 | | | | 0,92 | | | | |
| – Gonflement V 313 | | | | 4,7 | | | | |

0 152 318

| RESINE UTILISEE | RESINE DE L'EXEMPLE 8 |
|---|---|
| Type panneau | Multicouche |
| – Taux encollage (C.E.,C.I.) | 14, 13 |
| – Temps de gel des mélanges collants (C.E., C.I. secondes) | |
| – Perforateur | |
| Teneur en formol (mg/hg) | 16,1 |
| – Epaisseur (mm) | 18,66 |
| – Masse volumique (kg/m3) | 705 |
| – Traction transversale (MPa) V 100 | 0,34 |
| – Gonflements (%) | |
| 2 heures | 4,1 |
| 24 heures | 8,7 |
| – Humidité (%) bois sec | 8,2 |

## Revendications

1°) Procédé de fabrication de liants aminoplastes, contenant pour une mole d'urée, 0,2 à 0,8 moles de mélamine, 2 à 5 moles de formol, 0,05 à 0,5 moles de phénol, caractérisé en ce qu'on condense dans une première étape, tout le phénol avec un précondensat d'urée et de formol de rapport molaire $\frac{F}{U}$ compris entre 3 et 6, ou avec du formol en solution aqueuse, en présence d'urée de manière que la proportion d'urée présente à cette étape, soit comprise entre 33 et 100 %, par rapport à l'urée totale finale contenue dans la résine finie, la condensation étant conduite à une température comprise entre 40 et 100° C, d'abord à pH neutre, puis à pH acide au plus égal à 5,5 pendant au moins 30 minutes et en ce que dans une deuxième étape, on ajoute après neutralisation toute la mélamine et la cas échéant une nouvelle quantité d'urée, de manière à ce que la proportion d'urée présente à ce stade soit au plus égale à 100 %, par rapport à l'urée totale contenue dans la résine finie, la condensation étant conduite à pH basique, au moins égale à 8, à une température comprise entre 40 et 100° C, jusqu'à ce que la viscosité du mélange réactionnel soit comprise entre 200 et 1500 mPa.s à 20° C, pour un extrait sec de 60 % et en ce que dans une troisième étape, on ajoute le cas échéant, le restant de l'urée après refroidissement à température comprise entre 40 et 80° C.

2°) Procédé selon la revendication 1 caractérisé en ce qu'on condense dans une première étape, la totalité du phénol avec un précondensat d'urée et de formol de rapport molaire $\frac{F}{U}$ compris entre 4 et 5, en présence d'urée.

3°) Procédé selon les revendications 1 et 2, caractérisé en ce que la condensation de la deuxième étape est conduite à pH égal à 8,5.

## Patentansprüche

1. Verfahren zur Herstellung von Aminoplastbindern, die auf ein Mol Harnstoff 0,2 bis 0,8 Mol Melamin, 2 bis 5 Mol Formaldehyd und 0,05 bis 0,5 Mol Phenol enthalten, dadurch gekennzeichnet, daß man in einer ersten Stufe das gesamte Phenol mit einem Harnstoff/Formaldehyd-Vorkondensat mit einem Formaldehyd/Harnstoff-Molverhältnis zwischen 3 und 6 oder mit Formaldehyd in wäßriger lösung in Gegenwart von Harnstoff so kondensiert, daß der in dieser Stufe vorliegende Harnstoffanteil zwischen 33 und 100 %, bezogen auf den im fertigen Harz vorliegenden endgültigen Gesamtharnstoff, ausmacht, wobei die Kondensation bei einer Temperatur zwischen 40 und 100°C, zunächst bei neutralem pH-Wert und dann bei einem sauren pH-Wert von höchstens 5,5 während mindestens 30 Minuten durchgeführt wird, daß man in einer zweiten Stufe nach Neutralisierung das gesamte Melamin und gegebenenfalls eine weitere Menge Harnstoff zugibt, derart, daß der in diesem Stadium vorliegende Harnstoffanteil höchstens 100 %, bezogen auf den im fertigen Harz vorliegenden Harnstoff, ausmacht, wobei die Kondensation bei einem basischen pH-Wert von mindestens 8 und bei einer Temperatur zwischen 40 und 100°C durchgeführt wird, bis die Viskosität der Reaktionsmischung für einen 60 %igen Trockenextrakt zwischen 200 und 1.500 mPa.s bei 20° C beträgt, und daß man gegebenenfalls in einer dritten Stufe nach Abkühlung auf eine Temperatur zwischen 40 und 80°C den restlichen Harnstoff zugibt.

2. Verfahren nach Anspruch 1, dadurch gekennzeichnet, daß man in einer ersten Stufe das gesamte Phenol mit einem Harnstoff/Formaldehyd-Vorkondensat mit einem Formaldehyd/Harnstoff-Molverhältnis zwischen 4 und 5 in Gegenwart von Harnstoff kondensiert.

3. Verfahren nach den Ansprüchen 1 und 2, dadurch gekennzeichnet, daß die Kondensation der zweiten Stufe bei einem pH-Wert von 8,5 durchgeführt wird.

## Claims

1. A process for producing carbamide bonding materials, containing, for 1 mole of urea, 0.2 to 0.8 moles melamine, 2 to 5 moles of formol, 0.05 to 0.5 moles of phenol, characterised in that in the first stage all the phenol is condensed with a precondensate of urea and formol having the molar ratio F/U between 3 and 6, or with formol in an aqueous solution, in the presence of urea so that the proportion of urea present at this stage, either between 33 and 100%, relative to the final total urea contained in the final resin, condensation being carried out at a temperature of between 40 and 100°C, at first with a neutral pH value, then with an acidic pH value equal to 5.5 at most for at least 30 minutes and in that in a second stage after neutralising all the melamine, and if necessary a new amount of urea is added, so that the proportion of urea present at this stage is equal to 100% at most, relative to the total urea contained in the finished resin, the condensation being carried out at a basic pH value, at least equal to 8, at a temperature of between 40 and 100°C, until the viscosity of the reactive mixture is between 200 and 1500 mPa.s at 20°C, a dried extract of 60% and that in a third stage the remaining urea is added after being cooled to a temperature of between 40 and 80°C.

2. A process according to claim 1, characterised in that in the first stage all the phenol is condensed with a precondensate of urea and formol with the molar ratio F/U of between 4 and 5, in the presence of urea.

3. A process according to claims 1 and 2, characterised in that the condensation of the second stage is conducted at a pH value equal to 8.5.